# EUROPEAN PATENT SPECIFICATION

(11) **EP 0 669 612 B1**
(45) Date of publication and mention of the grant of the patent: **08.03.2000**
(21) Application number: 95107275.0
(22) Date of filing: 17.12.1990
(51) Int. Cl.: G11B 7/125, G11B 11/10, G11B 7/00

(54) **Optical recording apparatus**
Optisches Aufzeichnungsgerät
Appareil d'enregistrement optique

(30) Priority: 20.12.1989 JP 33083889
(43) Date of publication of application: 30.08.1995
(62) Divisional of application: 91900322.8
(73) Proprietor: SONY CORPORATION, Tokyo 141 (JP)
(72) Inventor: Udagawa, Toshiki, Shinagawa-ku, Tokyo, 141 (JP); Yoshimura, Shunji, Shinagawa-ku, Tokyo, 141 (JP); Ohta, Masumi, Shinagawa-ku, Tokyo, 141 (JP)
(74) Representative: Müller, Frithjof E., Dipl.-Ing.

(56) References cited:
- EP-A- 0 289 260
- EP-A- 0 335 486
- WO-A-91/05341
- DE-A- 3 727 681
- DE-A- 3 804 240
- PATENT ABSTRACTS OF JAPAN vol. 13 no. 475 (P-950) ,27 October 1989 & JP-A-01 185839 (NEC CORP.) 25 July 1989,
- PATENT ABSTRACTS OF JAPAN vol. 8 no. 245 (P-312) ,10 November 1984 & JP-A-59 117743 (NIPPON DENKI K.K.) 7 July 1984,

## Description

### TECHNICAL FIELD

The present invention relates to an optical recording apparatus capable of performing a high-density recording by removing the influence of remaining heat of a recording medium due to a preceding laser light pulse radiated thereon.

### BACKGROUND ART

Conventionally, it has been known an optical recording apparatus wherein a recording medium is heated by using energy of a laser light beam to change magneto-optical characteristics thereof to thereby record data thereon.

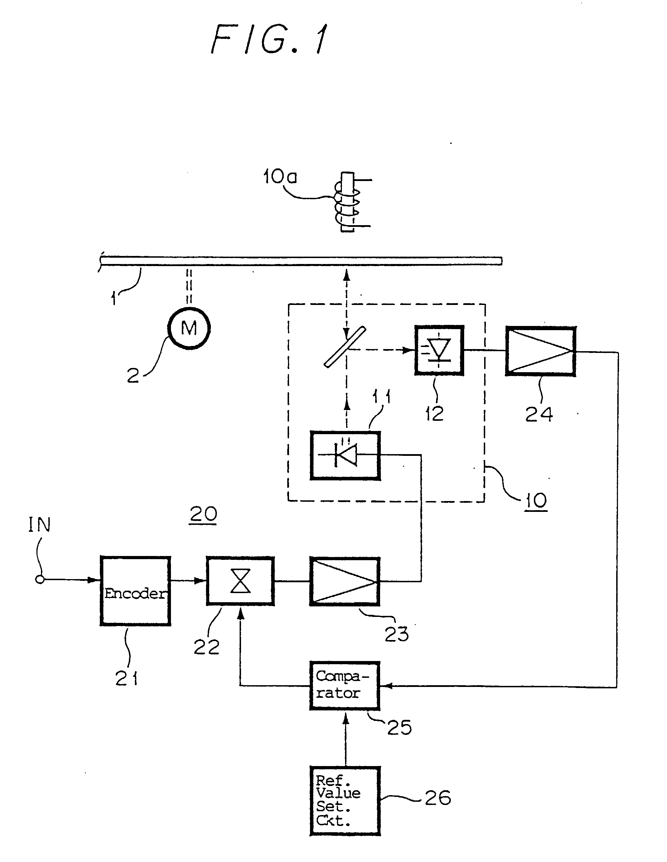

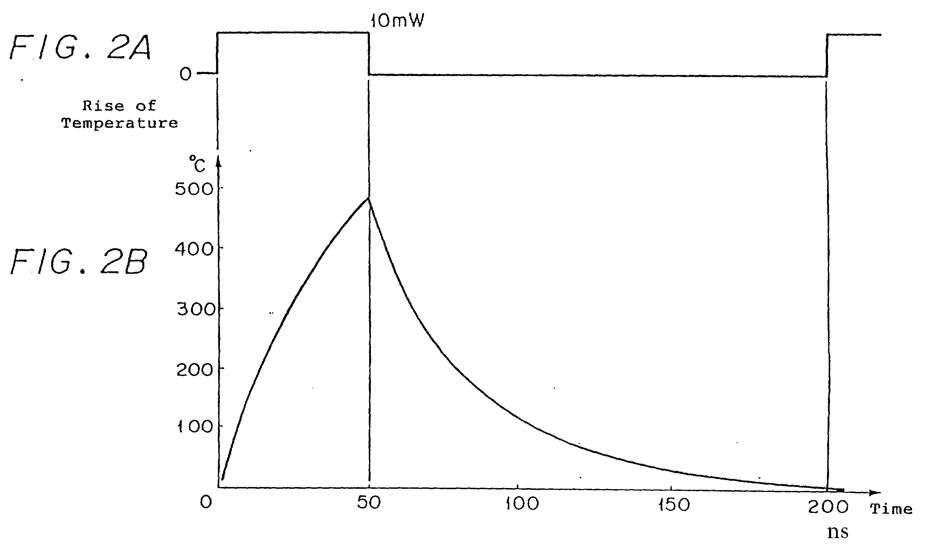

At first, a conventional optical recording apparatus will be explained with reference to Figs. 1 and 2.

An example of the construction of the conventional optical recording apparatus is shown in Fig. 1. For simplifying the explanation, the explanation of various types of servo control circuits will be omitted in this conventional example of Fig. 1.

Referring now to Fig. 1, reference numeral 1 denotes a magneto-optical disc acting as an optical disc which is capable of rewriting data and rotated at a constant angular velocity or a constant linear velocity by a spindle motor 2. Reference numeral 10 denotes an optical head having a laser diode 11 and a photo diode 12 for writing data to (or reading data from) the magneto-optical disc 1. A magnetic head 10a acting as an external magnetic field supplying apparatus is disposed in opposite to the optical head 10 through the magneto-optical disc 1 in a manner that the magnetic head and the optical head sandwich the magneto-optical disc 1 in an opposite manner.

In this construction, magnetizing direction of a part of a vertical magnetic recording film of the magneto-optical disc 1 where a laser light beam from the optical head 10 is radiated is changed in accordance with a direction of external magnetic field supplied from the magnetic head 10a.

Reference numeral 20 denotes a recording circuit system, wherein digital data as an information signal to be recorded on the magneto-optical disc 1 is supplied to an encoder 21 through an input terminal IN and converted not only into a predetermined format but also into a recording signal accorded with a modulation method such as a pulse position modulation, for example, by the encoder 21. The output of the encoder 21 is supplied to a light intensity modulation circuit 22 which in turn delivers an output signal to the laser diode 11 through a driving amplifier 23 to thereby intermittently control an intensity of radiated light from the diode.

A part of the laser light beam radiated from the laser diode 11 is reflected by a prism mirror and detected by the photo diode 12. The detected output of the photo diode 12 is supplied to a comparator 25 through an amplifier 24 and compared therein with a reference value applied from a reference value setting circuit 26. The output from the comparator 25 is fed back to the light intensity modulation circuit 22 to control the light intensity (power level) of the laser diode 11 at a constant value, thereby performing a so-called automatic power control (APC).

Now, with reference to Fig. 2, a method of forming a recording area (mark) in the conventional optical recording apparatus will be explained.

When a recording linear velocity of the magneto-optical disc 1 is 10 m/s, for example, a laser light with a power level of 10 mW and a pulse width of 50 ns, for example, is radiated from the diode 11 as shown in Fig. 2A, a temperature of a recording layer of the magneto-optical disc 1 increases and then decreases as shown in Fig. 2B, so that a mark with a length twice as large as the pulse width of the radiated laser beam, that is, a time length of 100 nS is recorded in the recording layer with a Curie point Tc of 180°C, for example, illustration thereof being omitted. In this case, the temperature of the recording layer corresponds to the center of radiation of the laser light beam whose energy density is accorded with Gausian distribution and is influenced also by thermal diffusion in the recording layer.

In the above-described example, as clear from Fig. 2B, at a time point where a time period corresponding to a beam radiation length twice as large as the mark length, that is, 200 nS has lapsed after initial start of the radiation of the laser light beam, the temperature of the recording layer of the magneto-optical disc 1 has decreased to a value almost same as that before the beam radiation thereon, so that a succeeding mark can be formed without being influenced by the remaining heat generated when forming the preceding mark. Thus, the modulation method such as the pulse position modulation can be employed without any difficulty.

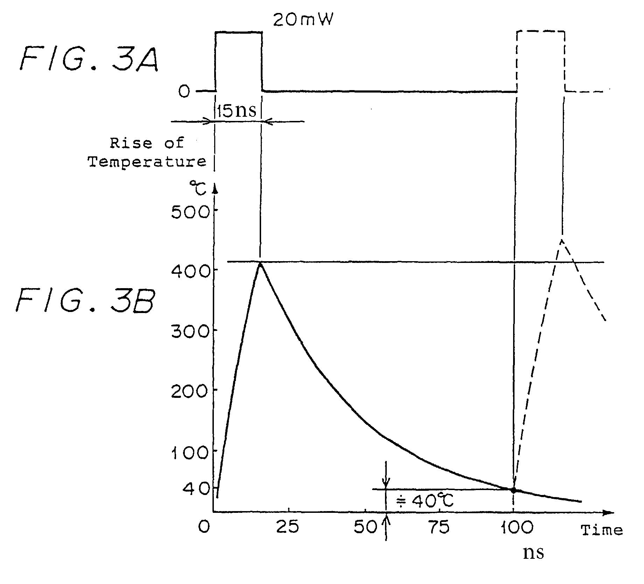

By the way, in order to perform a high-density recording, it has been proposed to set a recording linear velocity same as that of the above-described example and set a time interval of radiation of the laser light beam half of that of the above-described example, for example, that is 100 nS,. thereby forming a mark with a time length of half of the radiation time interval, that is, 50 nS. In this case, as known by JP-A-58-212628 filed by the same applicant as the present application and so on, for example, due to the influence by the thermal diffusion of the recording layer, it is required to reduce a pulse width of the radiated laser light beam and to increase a power level thereof when compared with the above-described example. Namely, a laser light with a pulse width of 15 ns and a power level of 20 mW, for example, is radiated from the diode 11 as shown in Fig. 3A to thereby increase and then decrease a temperature of the recording layer of the magneto-optical disc 1 as shown in Fig. 3B to form a mark with a predetermined time length, that is, 50 ns can be formed.

In this case, however, as clear form Fig. 3B, at a time point where a time period corresponding to a beam radiation length twice as large as the mark length, that is, 100 ns has lapsed after initial start of the radiation of the laser light beam, a time period lapsed after termination of the laser beam radiation is such a shorter value as almost half of that of the above-described example, so that a temperature of the recording layer of the magneto-optical disc 1 merely decreases to a value higher by about 40°C than a temperature at the initiation of the laser beam radiation.

This residual temperature increase, that is, remaining heat generated when forming the preceding mark is added to the temperature increase of the recording layer when forming a succeeding mark as shown by a dotted line in Fig. 3B, so that a time period required to reach to Curie point Tc in the recording layer is made shorter in a temperature rising mode and a time period required to reach to Curie point Tc in the recording layer is made longer in a temperature falling mode. Thus, front and rear edges of a mark to be formed are shifted to a former and a rear side from predetermined positions respectively and so a desired mark can not be formed accurately, whereby there was such a problem that an error occurs in data reproduced from the marks in the modulation method of the pulse position modulation type.

A known optical recording apparatus (JP 63-39138 A) controls the laser power. The amplitude of the laser driving signal pulse is increased automatically in case of a longer pause time between two pulses, and if the preceding pulse is dense, the amplitude is decreased. Then the result is recorded. Thus the level and the peak shift of the reproduced wave form is considerably decreased.

Another known optical recording apparatus (JP 59-117743 A) controls the laser power in response to the changing of the relative speed between a recording head and a recording medium. The influence of remaining heat of the recording medium is not mentioned.

EP-A-0 289 260 describes a known optical disc recording device, on which the preamble of claim 1 is based, comprising a laser beam control means of a mark length recording type. The laser beam control means shortens radiation time of laser beam as pit length of the pit to be formed increases. That is, the pit length of a pit presently to be formed is detected and the laser beam radiation time is controlled according to the detected pit length. Further, the laser beam control means of the known optical disc recording device shortens radiation time of the laser beam as immediately preceding blank length of a pit to be formed decreases. The shortening of the radiation time cancels tendency to increasing of pit length, whereby a pit of pit length which is close to a set value can be formed.

### DISCLOSURE OF INVENTION

Accordingly, it is an object of the present invention to provide an optical recording apparatus which is capable of recording a high-density pulse signal accurately on a recording medium by cancelling influence of remaining heat of the recording medium due to a laser light pulse corresponding to a preceding pulse signal.

The above object is, according to the invention, solved by the features as specified in the independent claim 1. Depending claims 2 to 6 are specifying advantageous developments thereof.

According to an essential aspect, the invention provides an optical recording apparatus wherein a modulation signal pulse based on recording data is supplied to light intensity modulating means of a laser light source and a light beam from a laser light source is radiated on an optical recording medium to record data thereon, the optical recording apparatus comprising:
- a pattern detecting means for detecting a pulse pattern of the modulation signal based on the recording data, and
- a pulse width control means for shortening a pulse width of a succeeding modulation signal, when said pattern detecting means detects that an interval between the preceding signal pulse and the succeeding signal pulse of the modulation signal is not more than a predetermined interval for compensating influence of the remaining heat of the optical recording medium, caused by the preceding modulation signal pulse, **characterized in that** said pulse width control means is shortening the pulse width of the succeeding modulation signal by delaying its leading pulse edge.

Thus, according to the present invention, influence of remaining heat of the recording medium due to a laser light pulse corresponding to a preceding signal pulse is cancelled to thereby record a high-density pulse signal accurately on a recording medium.

### BRIEF DESCRIPTION OF DRAWINGS

Fig. 1 is a block diagram illustrating the construction of an example of a conventional optical recording apparatus,
Fig. 2 is a timing chart for explaining operation of the conventional optical recording apparatus,
Fig. 3 is a timing chart for explaining the present invention,
Fig. 4 is a block diagram illustrating the construction of an embodiment of the present invention,
Fig. 5 is a block diagram illustrating a construction of main parts of the embodiment of the present invention,
Fig. 6 is a timing chart for explaining an operation of the embodiment of the present invention, and
Fig. 7 is a graph for explaining the change in temperature of a recording medium.

### BEST MODE FOR CARRYING OUT THE INVENTION

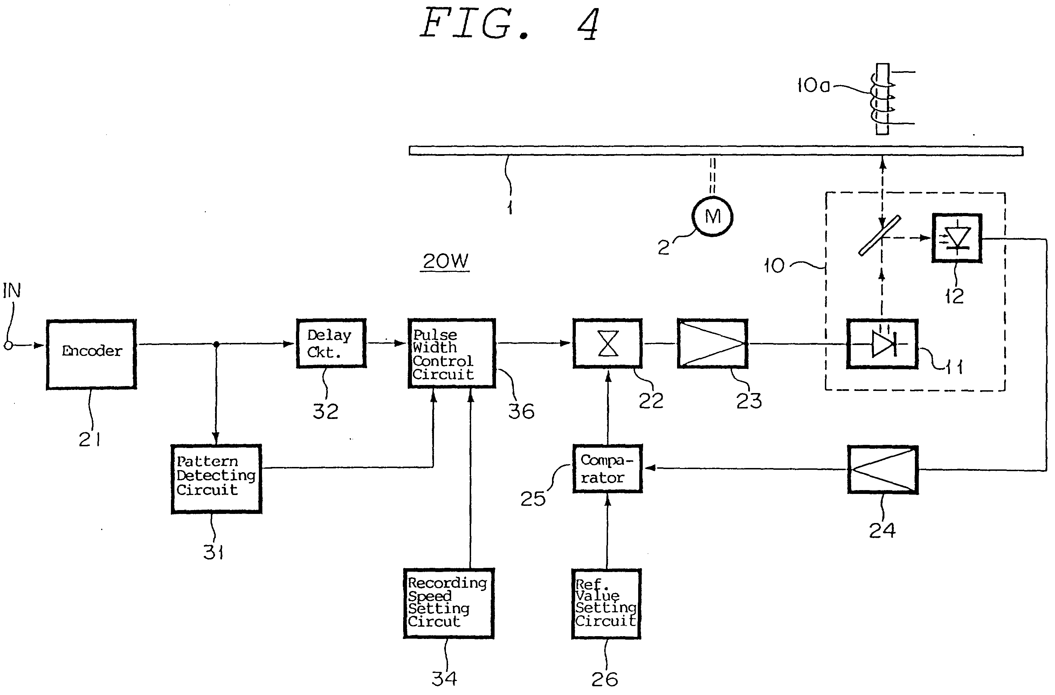

An embodiment of an optical recording apparatus according to the present invention will be explained with reference to Figs. 4 to 7.

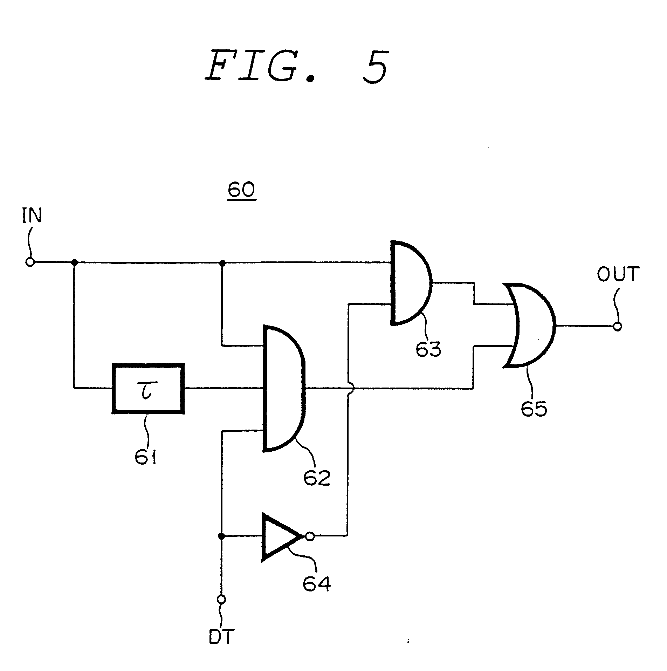

The constructions of the embodiment of the present invention is shown in Fig. 4 and the construction of main parts thereof is shown in Fig. 5. In Fig. 4, constituent elements corresponding to those shown in Figs. 1 to 3 are represented by the same reference numerals and the explanation thereof is omitted.

In the embodiment of Fig. 4, reference numeral 20W denotes a recording circuit system having a pulse width control circuit 36 for controlling a pulse width of a recording signal. An output of an encoder 21 is supplied to a pattern detecting circuit 31 and also to the pulse width control circuit 36 through a delay circuit 32. The pattern detecting circuit 31 detects a pulse pattern of the recording signal. The delay circuit 32 is compensating a signal processing time. The pulse width control circuit 36 also receives an output from a recording speed setting circuit 34 and delivers an output thereof to a modulation circuit 22 directly. A reference value from a reference value setting circuit 26 is supplied to a comparator 25. The rest of the construction is the same as that of the example of Fig. 1.

In Fig. 5, reference numeral 60 denotes a pulse width control circuit corresponding to the pulse width control circuit 36 in Fig. 4. An input pulse from a terminal IN is supplied to each of a delay circuit 61 and AND gates 62 and 63 and an output of the delay circuit 61 with a delay time of τ is supplied to the AND gate 62. A detection signal from a terminal DT is directly applied to the AND gate 62 and also applied to the AND gate 63 through a NOT circuit 64. Output signals from the AND gates 62 and 63 are delivered to a terminal OUT through an OR gate 65.

Operation of the embodiment of Fig. 4 is as follows.

In the pulse width control circuit 60 in Fig. 5, when a level of the detecting signal at the terminal DT is "0", the AND gate 62 is closed but the AND gate 63 is opened to pass the input pulse from the terminal IN directly to the terminal OUT.

On the other hand, when a level of the detecting signal at the terminal DT is "1", the AND gate 62 is opened but the AND gate 63 is closed, so that the input pulse from the terminal IN is delayed at its leading edge by the time τ but not changed at a rear edge thereof to thereby be shortened in its pulse width by the time τ and delivered to the terminal OUT.

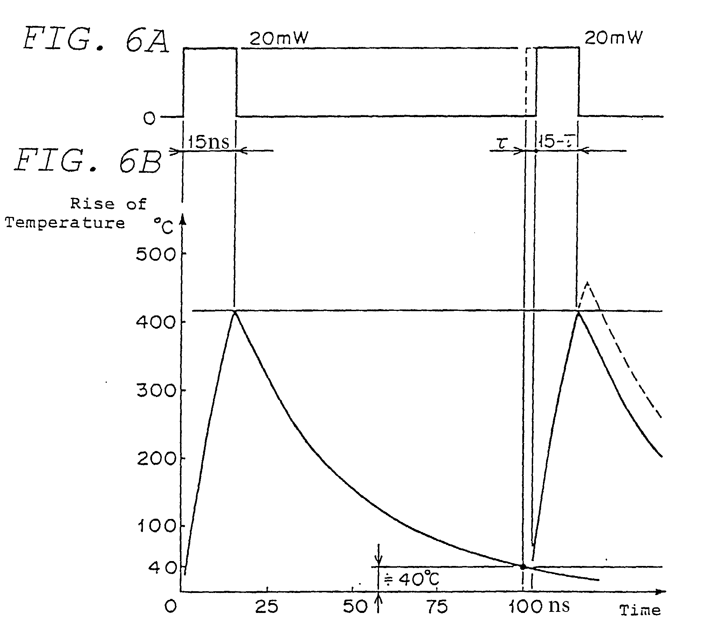

If it is detected that an interval of a pulse pattern of a recording signal is equal to ore less than a predetermined value in the pattern detecting circuit 31 of Fig. 4, the control circuit 36 controls a pulse width of an input pulse applied thereto in accordance with the detecting signal representing this fact from the pattern detecting circuit in a manner that a leading edge of a succeeding laser light pulse is delayed by the time τ as shown in Fig. 6A.

An example of numerical values in case of decreasing a pulse width will be shown hereinafter. When data is recorded on a magneto-optical disc by a laser light beam with a linear velocity of 10 m/s, recording frequency of 12.5 MHz, pulse interval of 80 ns, and pulse width of 15 ns, for example, a succeeding pulse signal can be recorded with compensating influence of the remaining heat of a preceding pulse signal if a pulse width of the succeeding pulse signal is set to be 12 ns at a room temperature.

Now, a degree of decreasing a pulse width of a succeeding pulse signal relative to an amplitude of a normal pulse signal depends not only on a recording linear velocity and an atmospheric temperature where the recording is performed as a matter of course but also is required to be changed depending on a pulse interval between the preceding and succeeding pulse signals, as in the same manner in case of decreasing a rate of an amplitude of a pulse signal as described above. The relation between a pulse interval and a temperature of the recording medium of the magneto-optical disc becomes same as that in case of decreasing an amplitude of a pulse signal as described above.

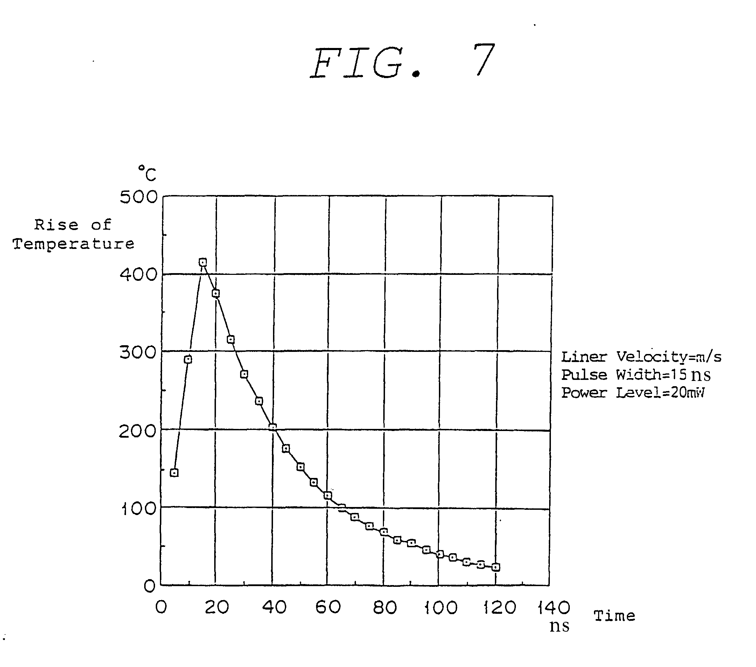

Now, in case of performing this correction of changing the pulse width, a rising portion of the characteristic curve of Fig. 7 becomes non-linear if a width of a pulse signal becomes too wide, so that it is required to correct the pulse width by taking this fact into consideration.

Thus, by correcting a pulse width of a succeeding pulse signal, the radiation time period of a succeeding laser light pulse on the recording layer is shortened, and so the temperature increasing rate of the recording layer of the magneto-optical disc 1 due to a succeeding laser light pulse becomes slightly gentle, so that a temperature of the recording layer at a time point of termination of radiation of the succeeding laser light pulse increases merely to the same level as that at a time point of termination of radiation of a preceding laser light pulse, as shown by a solid line in Fig. 6B, thereby cancelling the influence of the remaining heat of the recording medium due to a preceding laser light pulse to make it possible to record a high-density pulse signal accurately.

Now, in the embodiment of Fig. 4, the leading edge of the succeeding laser light pulse is delayed by the time τ, but the same effect can be obtained by shortening a pulse width of a laser light beam pulse in a manner of advancing a trailing edge thereof by a suitable time period or by shifting both the leading and trailing edges thereof by a suitable time period.

Explanations of the embodiment has been made of a case of using a magneto-optical disc as an example of optical discs but the present invention can be applied to any types of optical discs which are capable of recording data thereon. For example, the present invention can be applied to a recording apparatus which mounts an optical disc such as a rewriteable type optical disc of a phase change type using a chalcogenide thin film or a write-once type optical disc using tellurium oxide etc. or the like.

As described above in detail, according to the present invention, if it is determined by detecting a pulse pattern of a recording signal that a pulse interval is equal to or less than a predetermined value, an pulse width of a succeeding pulse signal is shortened to thereby decrease a radiation energy of a laser light pulse, so that there can be provided with an optical recording apparatus which can cancel the influence of the remaining heat of the recording medium due to a preceding laser light pulse to make it possible to record a high-density pulse signal accurately.

## Claims

1. An optical recording apparatus, wherein a modulation signal pulse based on recording data is supplied to light intensity modulating means (22) of a laser light source (11) and a light beam from a laser light source is radiated on an optical recording medium (1) to record data thereon, the optical recording apparatus comprising:
- a pattern detecting means (31) for detecting a pulse pattern of the modulation signal based on the recording data, and
- a pulse width control means (36) for shortening a pulse width of a succeeding modulation signal, when said pattern detecting means detects that an interval between the preceding signal pulse and the succeeding signal pulse of the modulation signal is not more than a predetermined interval for compensating influence of the remaining heat of the optical recording medium, caused by the preceding modulation signal pulse, **characterized in that** said pulse width control means (36) is shortening the pulse width of the succeeding modulation signal by delaying its leading pulse edge.

2. The optical recording apparatus according to claim 1, wherein said pulse width control means (36) is delaying said leading pulse edge for a predetermined time period (τ).

3. The optical recording apparatus according to claim 1, **characterized in that** said pattern detecting means (31) generates a detection output (DT) to be supplied to said pulse width control means (36) when an interval between the succeeding modulation signal and a modulation signal pulse immediately preceding to said succeeding modulation signal becomes not more than a predetermined value.

4. The optical recording apparatus according to claim 1, **characterized in that** a degree of decreasing the pulse width of the succeeding modulation signal is changed depending on a pulse interval between the preceding modulation signal and the succeeding modulation signal.

5. The optical recording apparatus according to claim 1, **characterized in that** a degree of decreasing the pulse width of the succeeding modulation signal is also depending on atmospheric temperature.

6. The optical recording apparatus according to claim 1, **characterized in that** said pulse width control means (36) includes recording speed setting means (34), and that a degree of decreasing a pulse width of the succeeding modulation signal is also depending on the recording speed as set by said recording speed setting means.

## Patentansprüche

1. Optisches Aufzeichnungsgerät, bei dem ein auf Aufzeichnungsdaten basierendes Modulationssignal an einen Lichtintensitätsmodulator (22) einer Laserlichtquelle (11) angelegt wird und ein Laserlichtstrahl der Laserlichtquelle auf ein optisches Aufzeichnungsmedium (1) abgestrahlt wird, um darauf Daten aufzuzeichnen, mit:
- einem Mustererkenner (31), der ein Impulsmuster des Modulationssignals basierend auf den Aufzeichnungsdaten erkennt, und
- einem Impulsbreiteregler (36) zum Verkürzen der Impulsbreite eines folgenden Modulationssignals, wenn der Mustererkenner erkennt, dass das Intervall zwischen dem vorangegangenen Signalimpuls und dem folgenden Signalimpuls des Modulationssignals nicht größer als ein vorbestimmtes Intervall ist, um den Einfluss der verbliebenen Wärme im optischen Aufzeichnungsmedium, wie durch den vorangegangenen Modulationssignalimpuls hervorgerufen, zu kompensieren, d**adurch gekennzeichnet, dass** der Impulsbreiteregler (36) die Impulsbreite des folgenden Modulationssignals durch Verzögern der vorderen Impulsflanke verkürzt.

2. Optisches Aufzeichnungsgerät nach Anspruch 1, bei dem der Impulsbreiteregler (36) die vordere Impulsflanke für eine vorbestimmte Zeitperiode (τ) verzögert.

3. Optisches Aufzeichnungsgerät nach Anspruch 1, **dadurch gekennzeichnet, dass** der Mustererkenner (31) ein Erfassungsausgangssignal (DT) erzeugt, das an den Impulsbreiteregler (36) zu liefern ist, wenn das Intervall zwischen dem folgenden Modulationssignal und einem Modulationssignalimpuls unmittelbar vor diesem folgenden Modulationssignal nicht größer als ein vorbestimmter Wert ist.

4. Optisches Aufzeichnungsgerät nach Anspruch 1, **dadurch gekennzeichnet, dass** das Ausmaß der Verringerung der Impulsbreite des folgenden Modulationssignals abhängig vom Impulsintervall zwischen dem vorangegangenen Modulationssignal und dem folgenden Modulationssignal geändert wird.

5. Optisches Aufzeichnungsgerät nach Anspruch 1, **dadurch gekennzeichnet, dass** das Ausmaß der Verringerung der Impulsbreite des folgenden Modulationssignals auch von der Atmosphärentemperatur abhängt.

6. Optisches Aufzeichnungsgerät nach Anspruch 1, **dadurch gekennzeichnet, dass** der Impulsbreiteregler (36) einen Aufzeichnungsgeschwindigkeitssteller (34) aufweist und das Ausmaß der Verringerung der Impulsbreite des folgenden Modulationssignals auch von der durch diesen Aufzeichnungsgeschwindigkeitssteller eingestellten Aufzeichnungsgeschwindigkeit abhängt.

## Revendications

1. Appareil d'enregistrement optique dans lequel un signal impulsionnel de modulation, basé sur des données d'enregistrement, est délivré à un moyen (22) de modulation d'intensité de lumière d'une source (11) de lumière laser et un faisceau de lumière issu de la source de lumière laser est projeté sur un support (1) d'enregistrement optique pour y enregistrer des données, l'appareil d'enregistrement optique comprenant :
un moyen (31) de détection de forme destiné à détecter une forme d'impulsion du signal de modulation basé sur les données d'enregistrement ; et
un moyen (36) de commande largeur d'impulsion destiné à raccourcir la largeur d'impulsion d'un signal de modulation suivant, lorsque ledit moyen de détection de forme détecte qu'un l'intervalle entre l'impulsion précédente de signal et l'impulsion suivante de signal du signal de modulation n'est pas plus grand qu'un intervalle prédéterminé, pour compenser l'influence de la chaleur rémanente du support d'enregistrement optique, provoquée par l'impulsion précédente de signal de modulation, caractérisé en ce que ledit moyen (36) de commande de largeur d'impulsion raccourcit la largeur d'impulsion du signal de modulation suivant en retardant son flanc avant d'impulsion.

2. Appareil d'enregistrement optique selon la revendication 1, dans lequel ledit moyen (36) de commande de largeur d'impulsion retarde, d'une période de temps (τ) prédéterminée, ledit flanc avant d'impulsion.

3. Appareil d'enregistrement optique selon la revendication 1, caractérisé en ce que ledit moyen (31) de détection de forme engendre une sortie (DT) de détection destinée à être délivrée audit moyen (36) de commande de largeur d'impulsion, lorsqu'un intervalle entre le signal de modulation qui suit et une impulsion de signal de modulation précédant immédiatement ledit signal de modulation qui suit devient inférieur ou égal à une valeur prédéterminée.

4. Appareil d'enregistrement optique selon la revendication 1, caractérisé en ce que le degré de diminution de la largeur d'impulsion du signal de modulation qui suit est modifié en fonction de l'intervalle entre impulsions entre le signal de modulation précédent et le signal de modulation qui suit.

5. Appareil d'enregistrement optique selon la revendication 1, caractérisé en ce que le degré de diminution de la largeur d'impulsion du signal de modulation qui suit est aussi fonction de la température de l'atmosphère.

6. Appareil d'enregistrement optique selon la revendication 1, caractérisé en ce que ledit moyen (36) de commande de largeur d'impulsion comprend un moyen (34) de fixation de vitesse d'enregistrement, et en ce que le degré de diminution de la largeur d'impulsion du signal de modulation qui suit est aussi fonction de la vitesse d'enregistrement fixée par ledit moyen de fixation de vitesse d'enregistrement.
